# EUROPEAN PATENT SPECIFICATION

(11) **EP 2 130 762 B1**
(45) Date of publication and mention of the grant of the patent: **29.04.2015**
(21) Application number: 09159140.4
(22) Date of filing: 30.04.2009
(51) Int. Cl.: B64C 3/28, B64C 5/00

(54) **Wing and empennage leading edge structure made of thermoplastic material with a stiffened double-shell configuration**
Flügel- und Leitwerkvorderkantenstruktur aus thermoplastischem Material mit einer versteiften Doppelschalenkonfiguration
Aile et structure de surface portante d'empennage fabriquées en matériau thermoplastique doté d'une configuration à double enveloppe durcie

(30) Priority: 06.05.2008 IT TO20080333
(43) Date of publication of application: 09.12.2009
(73) Proprietor: Alenia Aermacchi S.p.A., 00195 Roma (IT)
(72) Inventor: Rinaldi, Ernesto, 84043 Agropoli (Salerno) (IT); Russo, Salvatore, 80010 Quarto (Napoli) (IT); Iannuzzo, Generoso, 83100 Avellino (IT); Riccio, Massimo, 81100 Caserta (IT); Sagnella, Giovanni, 82100 Benevento (IT)
(74) Representative: Fioravanti, Corrado

(56) References cited:
- EP-A1- 1 371 551
- WO-A1-2007/071398
- US-A- 4 105 817
- US-A- 4 895 491

## Description

The present invention relates to wing and empennage leading edge structure, comprising an outer shell suitable to define a front portion of an airfoil, said outer shell being made of a bent plate of a fiber-reinforced resin composite material.

Wings and empennage (both vertical and horizontal) are primary structures that are normally dimensioned in terms of stiffness and strength according to the aerodynamic loads to which they can be subjected during flight and/or landing (or take-off) steps.

A particular mention should be made of the requirements to be met by the leading edges of these structures: in these cases, this structure is generally defined and dimensioned by the resistance to possible bird strike during the flight and landing (or take-off) steps.

The so-called *bird strike* testing is regulated according to FAR 25.631 and sets forth that: when an aircraft impacts with a bird of a defined weight and at a set velocity, following this condition no damage shall occur to the primary structures such as to affect the aircraft safe landing at the nearest airport. As the leading edge is the first structural element which is most likely to be subjected to this kind of impact in cruise conditions, this structure must accordingly comply with the above-defined regulation.

Obviously, besides the above requisite, the leading edge requires to be suitably dimensioned such as to withstand the aerodynamic loads applied thereto.

The above-mentioned structures are usually designed and manufactured such as to prevent the leading edge from being perforated, and thus avoiding possible damages to the structure at the back, or, when perforation is expected, they are designed such that the damage is locally limited.

Traditionally, wing structures are made of aluminum (generally, shells are a few mm thick) reinforced with transversal elements, which have the main task of shaping the profile. A typical example is C-27J Spartan leading edge structure.

Other feasible solutions are, for example, those used in ATR 42-72 regional aircrafts, in which the leading edge is made of double-sandwich glass fiber, or Airbus A380, which has a vertical leading edge of Glare® (a glass fiber/aluminum laminate), and a wing leading edge of a thermoplastic material, or still in Boeing aircrafts of last generation, in which the leading edge of the horizontal empennage is a sandwich of fiber glass with a thin outer aluminum layer, or finally in Airbus A400M, in which the fixed wing leading edge is of an aluminum-carbon fiber mixed structure.

In general terms, accordingly, the materials used for known structures can be metal (aluminum), hybrid (Glare®) or sandwich (glass fiber and honeycomb, carbon fiber and honeycomb) materials, and are used to manufacture a configuration with a single primary bearing element (shell).

US 4 105 817 discloses a leading edge structure as defined in the preamble of claim 1.

The object of the present invention is to provide an alternative to known solutions, which has advantages both in terms of structural configuration and in terms of materials and processes used.

The object of the present invention is thus a leading edge structure as defined in claim 1. The invention further provides a method for manufacturing a leading edge structure, as defined in claim 3.

A preferred, though non limiting, embodiment of the invention will be now described, with reference to the annexed drawings in which:
- Fig. 1 is a cross-sectional schematic view illustrating a leading edge structure according to the invention;
- Fig. 2 is a perspective view of a leading edge structure module according to the invention;
- Fig. 3 is a perspective view illustrating several leading edge structure modules when fixed to each other;

- Fig. 4 is a view of a detail of Fig. 3, as indicated by the arrow IV; and
- Fig. 5 is a perspective view of the leading edge structure when applied to a wing structure.

It should be noted that the figures relate to various configurations of the structure being the object of this patent (number, shape and position of the cross elements) such as to point out the flexibility thereof relative to the various applications provided herein (in terms of position, size, processes, materials).

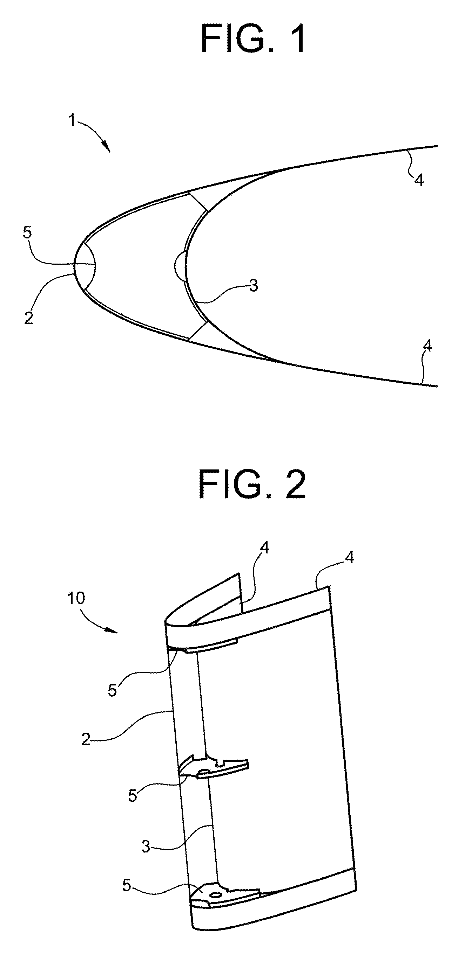

In Fig. 1 is schematically illustrated a cross section of a wing and empennage leading edge structure globally indicated with 1.

In the following description, the terms "front", "outer" and "inner" will be used. The term "front" is obviously related to the aircraft movement direction, whereas the terms "outer" and "inner" are general references to a condition in which the leading edge structure is assembled to the remaining wing structure or empennage, whereby the "inner" elements result to be closed within the wing structure or empennage.

The leading edge structure 1 comprises an outer shell 2 suitable to define a front portion of a airfoil. This outer shell 2 is formed by a bent plate of a fiber-reinforced thermoplastic resin composite material. Examples of this material comprise, but are not limited thereto, PPS (Polyphenylene sulphide), PEEK (Polyether-etherketone), PEKK (Polyether ketone ketone) that may be either previously impregnated or infused with short, long fibers or fabrics or mats of carbon or glass fibers, and optionally stiffened with metal strands.

The structure 1 further comprises an inner shell 3 having a convex profile oriented in the same direction as the profile of outer shell 2. In other words, the convexity of the inner shell 3 is oriented in the same direction (i.e. forwards) as the convexity of the outer shell 2.

The inner shell 3 is also formed by a bent plate of fiber-reinforced thermoplastic resin composite material. As examples of this material, reference should be made to what has been described above for the outer shell 2.

The inner shell 3 is bonded to the outer shell 2 at the longitudinal edges 4 thereof. This bonding is simply obtained by means of the thermoplastic resin of the material of the two shells 2, 3. Thereby, an optimum continuity is obtained between these shells at the mutual bonding areas.

The structure 1 further comprises one or more reinforcing elements 5 transversally extending such as to connect the outer shell 2 and inner shell 3 to each other. Each of these reinforcing elements 5 is formed by a piece of fiber-reinforced resin composite material. Preferably, it is a thermoplastic resin, but it may also be a thermosetting resin, e.g. an epoxy resin. As examples of reinforced thermoplastic resin, reference should be made to what has been described above for the outer shell 2.

Each of the reinforcing elements 5 is fixed at opposite ends to the outer shell 2 and inner shell 3, respectively. This fixing is obtained, for example by means of bolting or bonding. When the resin of the reinforcing elements 5 is also a thermoplastic resin, the bonding is advantageously obtained by means of the thermoplastic resin of the material of the two shells 2, 3. Thereby, an optimum continuity is obtained between each reinforcing element and the outer shell on the one side, and between each reinforcing element and the inner shell, on the other side.

The above-described structure is based on a progressive shock-absorption concept, by providing several successive walls being suitably spaced from each other, and supported to one another, such that the impact energy is gradually distributed throughout the penetration step following the impact. The impact substantially takes place against the first shell which absorbs an energy aliquot, while in the meantime the reinforcing elements transmit a portion of this energy to the inner shell. Upon breaking of the outer shell the part of the bird passing therethrough (with a considerably lessened impact energy) is stopped by the inner shell.

According to a preferred manufacturing process, the structure 1 is manufactured by means of a matched moulding process. Each of the parts, i.e. the outer shell 2, the inner shell 3 and the reinforcement elements 5 is manufactured separately by means of matched moulding, at such a temperature as to cause the softening of the resin composing the material of these parts.

After these parts are cooled, they are then assembled to each other, and welded at mutual contact points (e.g., by laser, induction, infrared techniques, etc.), such as to provide an intimate connection therebetween.

Preferably, when large sized components are used, the structure 1 is manufactured in single separated modules, each of which comprises an outer shell 2, an inner shell 3, and at least one cross-connecting element 5. In Fig. 2 an example of one of these modules is illustrated, which is globally indicated with 10. The outer shell 2 is illustrated in phantom, such as to make the inner parts visible.

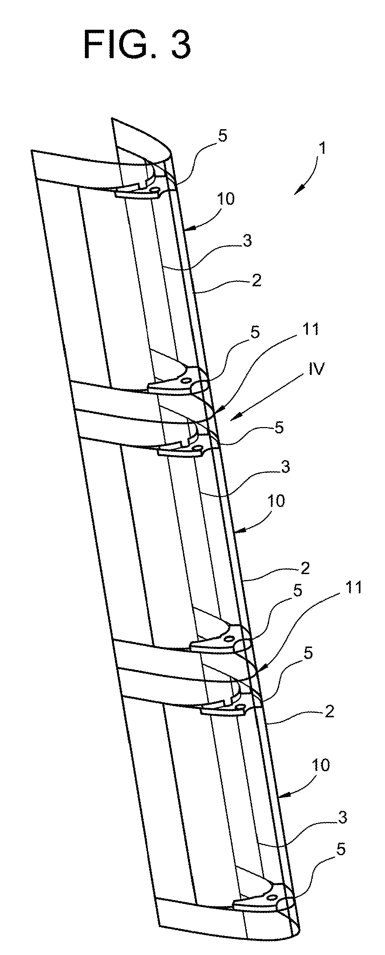

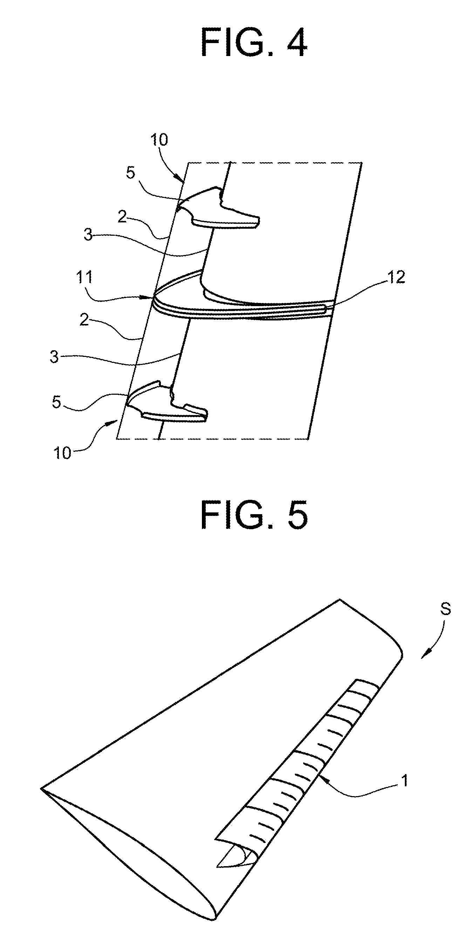

As illustrated in Fig. 3 and 4, the individual modules 10 are aligned and fixed to each other via mechanical connection means, such as bolts (not illustrated), such as to provide the leading edge structure 1 complete with a wing structure or empennage. In Fig. 4 a possible example of junction 11 between two adjacent modules 10 is illustrated, which junction is obtained by means of an intermediate plate 12 that is mechanically connected to both modules 10.

As illustrated in Fig. 5, the completed structure 1 is then assembled to the remainder of the wing structure or empennage S by means of mechanical connection means (not illustrated).

## Claims

1. A leading edge structure (1) for wing structures and empennages, comprising an outer shell (2) suitable to define a front portion of a airfoil, said outer shell being formed by a bent plate of a fiber-reinforced thermoplastic resin composite material, the leading edge structure further comprising:
an inner shell (3) having a convex profile being oriented in the same direction as the profile of the outer shell (2), which is formed by a bent plate of a fiber-reinforced thermoplastic resin composite material and is bonded to the outer shell (2) at the longitudinal edges (4) thereof, and
at least one transversally extending reinforcing element (5) connecting the outer shell (2) and the inner shell (3) to each other, formed by at least one piece of a fiber-reinforced resin composite material and fixed to the outer shell (2) and inner shell (3);
**characterized in that** the structure (1) comprises several reinforcing elements (5) in form of transversally extending walls spaced from each other and connecting the outer shell (2) and the inner shell (3).

2. The structure according to claim 1, formed by a plurality of separate modules (10), each of said modules comprising said inner shell, outer shell and at least one connecting element, which are arranged aligned in the longitudinal direction of said structure, and fixed to each other by means of mechanical connecting means.

3. A method for manufacturing a leading edge structure (1) according to claim 1 or 2, comprising the following steps:
preparing and moulding a first plate of fiber-reinforced thermoplastic resin composite material, intended to provide said outer shell,
preparing and moulding a second plate of fiber-reinforced thermoplastic resin composite material, intended to provide said inner shell,
preparing and moulding several walls of fiber-reinforced resin composite material, intended to provide said transversally extending reinforcing elements (5), and
assembling and fixing said outer shell, inner shell, and reinforcing elements to each other, such that the inner shell is bonded to the outer shell (2) at the longitudinal edges thereof (3), and such that said reinforcing elements (5) form transversally extending walls that are spaced from each other and are bonded at opposite ends to the outer shell (2) and inner shell (3), respectively.

## Patentansprüche

1. Anströmkanten-Aufbau (1) für Flügel und Leitwerke, mit einer äußeren Hülle (2), die dazu ausgelegt ist, einen vorderen Teil einer Tragfläche zu bilden, welche äußere Hülle aus einer gekrümmten Platte eines Faser-verstärkten thermoplastischen Verbundmaterials gebildet ist, wobei der Anströmkanten-Aufbau ferner aufweist:
eine innere Hülle (3) mit einem konvexen Profil, das in dieselbe Richtung wie das Profil der äußeren Hülle (2) weist, welche innere Hülle (3) aus einer gekrümmten Platte eines Faser-verstärkten thermoplastischen Verbundmaterials gebildet und mit der äußeren Hülle (2) an deren Längskanten (4) verbunden ist, und
mindestens ein sich quer erstreckendes, die äußere Hülle (2) und die innere Hülle (3) miteinander verbindendes Verstärkungselement (5), das aus zumindest einem Stück Faser-verstärkten Verbundmaterials gebildet wird und an der äußeren Hülle (2) und der inneren Hülle (3) befestigt ist;
**dadurch gekennzeichnet, dass** der Aufbau (1) eine Mehrzahl Verstärkungselemente (5) in Form sich quer erstreckender Wände aufweist, welche zueinander beabstandet sind und die äußere Hülle (2) und die innere Hülle (3) verbinden.

2. Der Aufbau nach Anspruch 1, welcher aus einer Vielzahl gesonderter Module (10) gebildet ist, wobei jedes der Module die innere Hülle, die äußere Hülle und mindestens ein Verbindungselement aufweist, welche Module in der Längsrichtung des Aufbaus ausgerichtet angeordnet sind und miteinander mittels mechanischer Verbindungsmittel verbunden sind.

3. Verfahren zum Herstellen eines Anströmkanten-Aufbaus (1) nach Anspruch 1 oder 2, welches Verfahren die folgenden Schritte aufweist:
Vorbereiten und Formen einer ersten Platte eines Faser-verstärkten thermoplastischen Verbundmaterials, welche für die äußere Hülle vorgesehen ist,
Vorbereiten und Formen einer zweiten Platte eines Faser-verstärkten thermoplastischen Verbundmaterials, welche für die innere Hülle vorgesehen ist, Vorbereiten und Formen mehrere Wände aus Faser-verstärktem Verbundmaterial, welche dazu vorgesehen sind, die sich quer erstreckenden Verstärkungselemente (5) zu bilden, und
Zusammensetzen und Befestigen der äußeren Hülle, der inneren Hülle und
der Verstärkungselemente aneinander derart, dass die innere Hülle mit der äußeren Hülle (2) an deren (3) Längskanten verbunden ist und die Verstärkungselemente (5) sich quer erstreckende Wände bilden, die zueinander beabstandet sind und jeweils an entgegengesetzten Enden mit der äußeren Hülle (2) und der inneren Hülle (3) verbunden sind.

## Revendications

1. Structure de bord d'attaque (1) pour structures d'ailes et empennages, comprenant une coque extérieure (2) appropriée pour définir une partie avant d'une surface portante, ladite coque extérieure étant formée par une plaque courbée en matériau composite à base de résine thermoplastique renforcée par des fibres, la structure de bord d'attaque comprenant en outre :
une coque intérieure (3) ayant un profil convexe qui est orienté dans la même direction que le profil de la coque extérieure (2), qui est formée par une plaque courbée en matériau composite à base de résine thermoplastique renforcée par des fibres et qui est collée à la coque extérieure (2) au niveau des bords longitudinaux (4) de celle-ci, et
au moins un élément de renforcement s'étendant transversalement (5) qui relie la coque extérieure (2) et la coque intérieure (3) l'une à l'autre, formé par au moins une pièce en matériau composite à base de résine renforcée par des fibres et fixé à la coque extérieure (2) et à la coque intérieure (3) ;
**caractérisée en ce que** la structure (1) comprend plusieurs éléments de renforcement (5) sous la forme de parois s'étendant transversalement, espacées les unes des autres, et reliant la coque extérieure (2) et la coque intérieure (3).

2. Structure selon la revendication 1, formée par une pluralité de modules séparés (10), chacun desdits modules comprenant ladite coque intérieure, ladite coque extérieure et au moins un élément de connexion, qui sont agencés en alignement dans la direction longitudinale de ladite structure, et fixés les uns aux autres à l'aide d'un moyen de connexion mécanique.

3. Procédé de fabrication d'une structure de bord d'attaque (1) selon la revendication 1 ou 2, comprenant les étapes suivantes :
préparer et mouler une première plaque en matériau composite à base de résine thermoplastique renforcée par des fibres, destinée à fournir ladite coque extérieure,
préparer et mouler une deuxième plaque en matériau composite à base de résine thermoplastique renforcée par des fibres, destinée à fournir ladite coque intérieure,
préparer et mouler plusieurs parois en matériau composite à base de résine renforcée par des fibres, destinées à fournir lesdits éléments de renforcement s'étendant transversalement (5), et
assembler et fixer ladite coque extérieure, ladite coque intérieure et des éléments de renforcement entre eux, de telle manière que la coque intérieure est collée à la coque extérieure (2) au niveau des bords longitudinaux de celle-ci, et de telle manière que lesdits éléments de renforcement (5) forment des parois s'étendant transversalement qui sont espacées les unes des autres et qui sont collées en des extrémités opposées, respectivement à la coque extérieure (2) et à la coque intérieure (3).
